# EUROPEAN PATENT APPLICATION

(11) **EP 1 728 610 A1**
(43) Date of publication of application: **06.12.2006**
(21) Application number: 06114131.3
(22) Date of filing: 18.05.2006
(51) Int. Cl.: B29C 33/04, B29C 33/38, B29C 33/56, B29C 45/73, B29C 33/40

(54) **Method for producing molding shells**

(30) Priority: 01.06.2005 US 140903
(71) Applicant: Weber Manufacturing Limited, Midland, Ontario L4R 4L1 (CA)
(72) Inventor: Benkovszki, Konrad, Perkinsfield Ontario ON L0L 2J0 (CA); Sheppard., Robert E., Penetanguishene Ontario ON L9M 1G7 (CA); Brayson, Andrew J., Midland ON L4R 5C5 Ontario (CA); Lafleur, Rene J., Penetanguishene Ontario ON L9M 1G2 (CA); Schmitz, Tom, Penetanguishene Ontario ON L9M 1A9 (CA)
(74) Representative: van Westenbrugge, Andries

(57) **Abstract**

A method of forming a flexible elastomer polymer fluid jacket for a plastic processing mold, and a novel elastomer polymer fluid jacket. The method comprises attaching channel formers to the rear surface of the metal shells of the mold sections to define a desired flow configuration, securing a support casting to the rear surface of the metal shells spaced from the channel formers to define a designed cavity, feeding a curable elastomer polymer typified by silicone elastomers into the cavity, curing the elastomer polymer, and removing the channel formers whereby the cured elastomer polymer forms a fluid jacket. A mold having mold components with flexible polymer fluid jackets between the mold shells, preferably nickel shells, and support castings permit enhanced heat transfer to the mold cavity while providing improved thermal insulation to the mold. The elastomer polymer also enables multiple modular configurations of the heating and/or cooling function of the mold.

## Description

### BACKGROUND OF THE INVENTION

### (i) Field of the Invention

This invention relates to thermoplastic and thermoset molding and, more particularly, relates to improved heating and cooling channels in thermoplastic and thermoset molds for enhanced heat transfer.

### (ii) Description of the Related Art

It is well known to produce metal shells such as nickel shells that are built into molds for injection/compression molding. These shells require heating/cooling lines, typically metal lines, attached to the back of the shell. The metallic lines for these heating/cooling lines are normally copper or steel tubing. The tubing is attached to the shell by various techniques such as welding, soldering, or other mechanical attachment, after machining the shell surface smooth, and the tubing is then encapsulated by a back-fill material such as concrete or epoxy. The shells with encapsulated heating/cooling lines are then mounted on a rear support frame.

The integration of heating/cooling lines into molds produces a number of disadvantages. The time required to hard pipe the back of the shell prior to encapsulating and assembly with a frame for a mold system can be substantial. During use, corrosion and stress from repeated heating/cooling cycles breaks down the piping and the hard pipe cannot be repaired easily. The mold shells must be separated from the support frame and the entire back of each mold, including the mold back-fill, must be destroyed in order to access the buried piping. The piping has a limited life span of approximately two years, after which time it usually must be removed and replaced with new piping, thereby requiring lengthy rebuilding times at frequent intervals with prolonged shut-down times. Operating and maintenance costs as a result can be expensive.

Heat transfer along the narrow lines of contact between the tubular copper or steel tubing and the planar metal shell normally is not efficient. Conversely, undesirable heat loss from the mold through the rear concrete fill can be substantial. Conventional molds for composite sink moldings have a high mass behind the shell to provide structural support under clamping and filling pressures. This mass absorbs energy from the conventional piping design and exacerbates heat transfer and loss from the rear of the mold.

U.S. Patent No. 5,169,549 discloses the encapsulation of metal heating and cooling lines in the nickel mold shells to improve heat transfer from and to the heating and cooling lines and to provide rigidity and strength to the shells. However, encapsulation of the metal lines is time consuming and expensive. Also, heat loss from the molds remains significant.

It is a principal object of the present invention therefore to provide a plastic processing mold having improved heat transfer through the metal mold shell while providing improved mold thermal insulation.

It is another object of the invention to provide a plastic processing mold which obviates the need for metallic heating/cooling lines.

It is a further object of the present invention to provide a mold which is simple and reliable in operation and which has an extended cycle life substantially free from corrosion.

A further object of the present invention is the provision of a novel method for the production of heating and casting channels in injection and compression mold fluid jackets. These and other objects of the invention and the manner in which they can be attained will become apparent from the following description.

Another object of the present invention is to provide a modular system which allows easy change of the heating/cooling circuit to accommodate changes in molding requirements.

### Summary of the Invention

In its broad aspect, the method for producing heating and/or cooling fluid channels in a fluid jacket for use in a mold having opposed metal shells, each with a front surface having the shape of an article to be molded and an opposite rear surface, and a rear support casting adapted to be attached to the rear of each shell to define a space between the metal shell rear surface and the support casting comprises attaching a channel former to the rear surface of each metal shell in a desired fluid flow configuration, attaching the respective support casting to the rear of the metal shell to define a designed cavity between the rear surface of each metal shell and the support casting, injecting a curable polymer elastomer into the cavity under pressure to fill the cavity, allowing the polymer to cure, and removing the channel formers from the cured polymer whereby said fluid channels are formed in the fluid jacket. An inlet flow connection and an outlet flow connection are formed in the support casting for connecting each of said fluid channels to a source of heating or cooling fluid.

More particularly, product of the invention relates to an elastomeric fluid jacket for use in a plastic processing mold produced by the method of the invention in which the elastomeric preferably is silicone elastomer.

The mold of the invention for injection or compression molding comprises a showface mold component and an opposed backface mold component, each of said mold components having a nickel shell with a rear surface, a flexible elastomer fluid jacket having fluid channels formed therein abutting said shell rear surface, a support casting attached to the rear of one of said nickel shells gripping the elastomer fluid jacket therebetween and a support frame casting attached to the rear of the other nickel shell gripping the elastomer fluid jacket therebetween, and means for attaching the showface mold component and the backface mold component together defining a mold cavity therebetween.

### Brief Description of the Drawings

The method and apparatus of the invention will now be described with reference to the accompanying drawings, in which:
- Figure 1: is a sectional view of a schematic illustration of a closed metal mold shell having channel formers attached to the inner surface of a shell wall, depicting injection of an elastomer polymer;
- Figure 2: is a sectional view corresponding to Figure 1 in which the elastomeric polymer has been injected and is curing;
- Figure 3: is an exploded sectional view corresponding to Figures 1 and 2 in which the shell mold components and cured elastomer casting are separated;
- Figure 4: is a sectional view of the metal mold corresponding to Figure 2 opened during removal of channel formers;
- Figure 5: is a sectional view of the metal mold closed after removal of channel formers;
- Figure 6: is a perspective sectional view of showface and backface mold components with injection molded product depicted between closed molds;
- Figure 7: is an exploded perspective view of the showface shell components illustrating the liquid channels formed on the silicone water jacket;
- Figure 8: is an exploded perspective view of the backface shell components with silicone water jacket having liquid channels (not shown) corresponding to the channel formers shown in Figure 6;
- Figure 9: is a perspective view of a showface metal shell showing channel formers mounted on the back of the shell;
- Figure 10: is a perspective view of the front of the showface shell shown in Figure 9;
- Figure 11: is a perspective view of a backface metal shell showing channel formers mounted on the back of the metal shell;
- Figure 12: is a perspective view of the front of the backface shell shown in Figure 11;
- Figure 13: is a cross-section of the showface and backface mold shells assembled together; and
- Figure 14: is an enlarged cross-section in detail of the area "A" shown in Figure 13.

### Description of the Preferred Embodiments

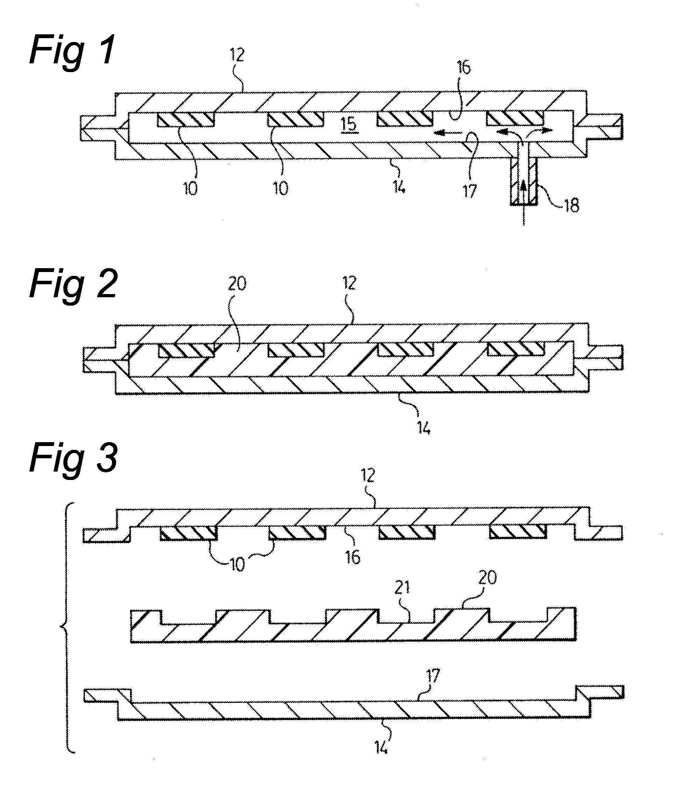

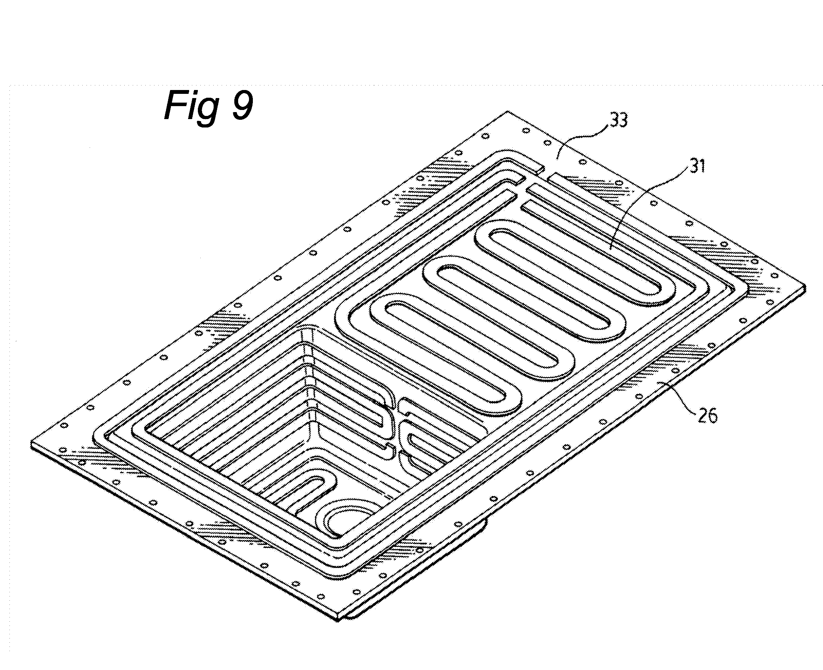

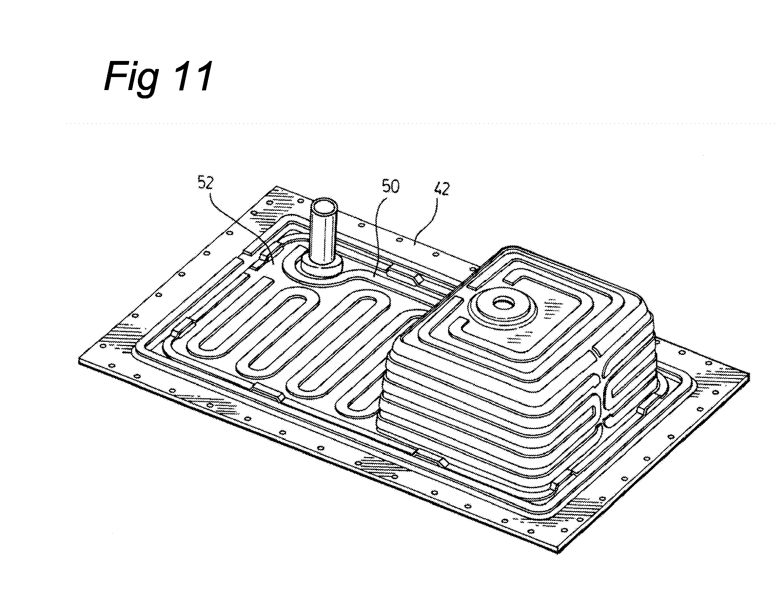

Figures 1-6 illustrate schematically the method of the invention for forming a flexible elastomer polymer fluid jacket with heating/cooling channels. A flexible material such as modelling clay or plastecine is extruded into an elongated channel former 10 having a profile of a desired channel cross-section, preferably about 5 mm thick and 25 mm wide. Channel formers 10 are then adhesively attached to the back of a metal mold shell, such as nickel shell 12, in a continuous or intermittent linear or sinusoidal pattern, as typified in Figures 9 and 11. Although the description will proceed with reference to nickel shells, it will be understood that other metal shells such as aluminum or steel shells are contemplated. The support casting 14, preferably a cast aluminum structure, is fastened to the back of the nickel shell 12 to define a space 15 about 10 mm wide between the rear surface 16 of the nickel shell 12 and the opposed surface 17 of the support frame 14. There is thus a designed space 15 defined between the casting frame 14, the shell 12 and the plurality of extruded channel formers 10.

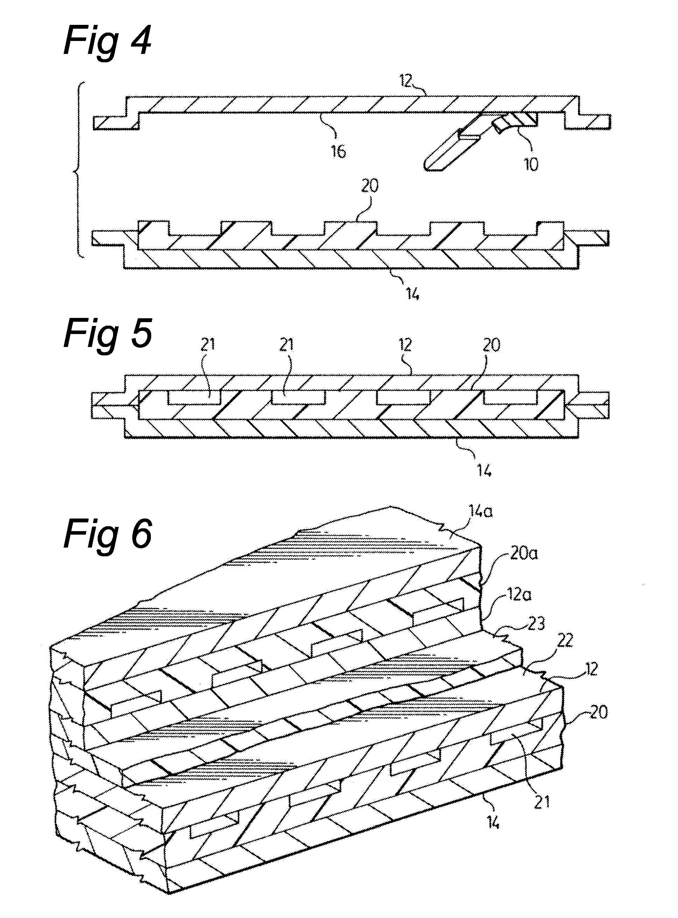

A silicone elastomer or similar elastomeric polymer rubber material is then injected into this space 15, between the nickel shell 12 and the aluminum support casting 14 through inlet 18, filling the entire available volume, as depicted in Figure 2. The cast silicone material is allowed to cure, and then the frame 14 is removed from the back of the shell 12, as illustrated in Figure 3. The cast silicone 20 is removed from the rear of the shell 12 and the channel formers 10 are removed from rear surface 16 of the shell 12, as shown in Figure 4. This results in the imprint of the cooling channels 21 remaining in the silicone to form the fluid jacket 20, typically a water jacket. The silicone jacket 20 is then reinstalled on the back of the shell 12, typified schematically in Figure 5, and the frame 14 rigidly fixed to the rear of the shell 12. Figure 6 illustrates metal mold shell 12 with support casting 14 and fluid jacket 20 therebetween. Opposed metal shell 12a with support casting 14a and fluid jacket 20a therebetween is secured to shell 12 to form a cavity 22 for molding of product 23.

Fluid channels 21 can be altered as required to design a flow pattern without the high expense and excessive downtime currently being experienced on conventional molds. The silicone rubber castings can be readily disassembled for service and interchanged with an alternative casting with a unique fluid channel pattern for a modular system. This facilitates process experiments to optimize heat transfer patterns to suit the catalyzing requirements of the material or the various shapes of the product being produced.

The use of silicone rubber as the medium to form the flexible gasket 20, 20a having conformal fluid channels improves energy efficiency of the molding process. The majority of the heat transfer occurs directly from the fluid into nickel shell. The silicone significantly reduces the energy transfer between the support frame and the fluid, thereby effectively transferring energy in and out of the molding process only.

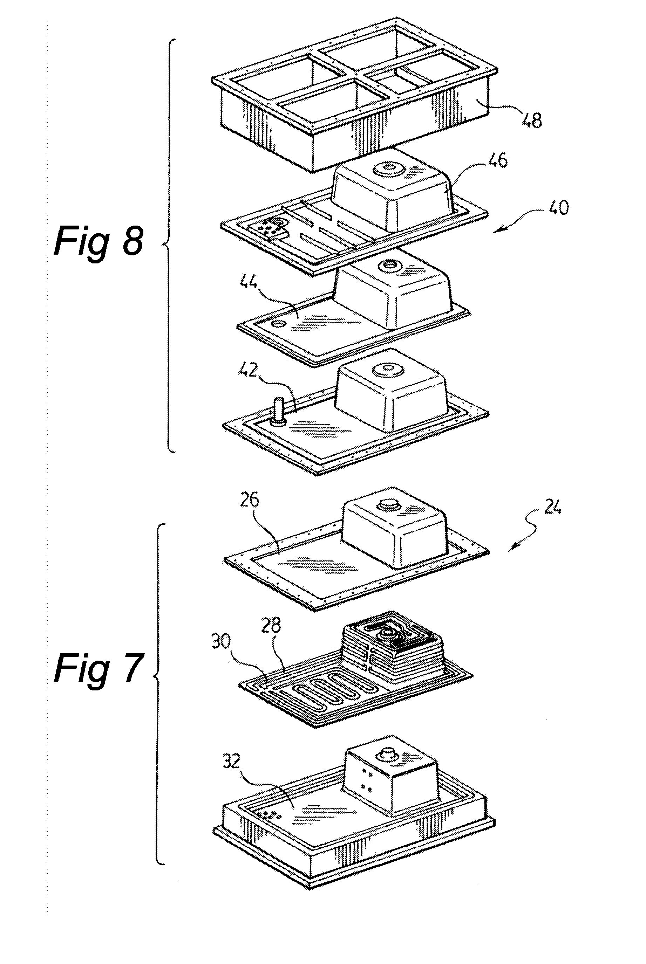

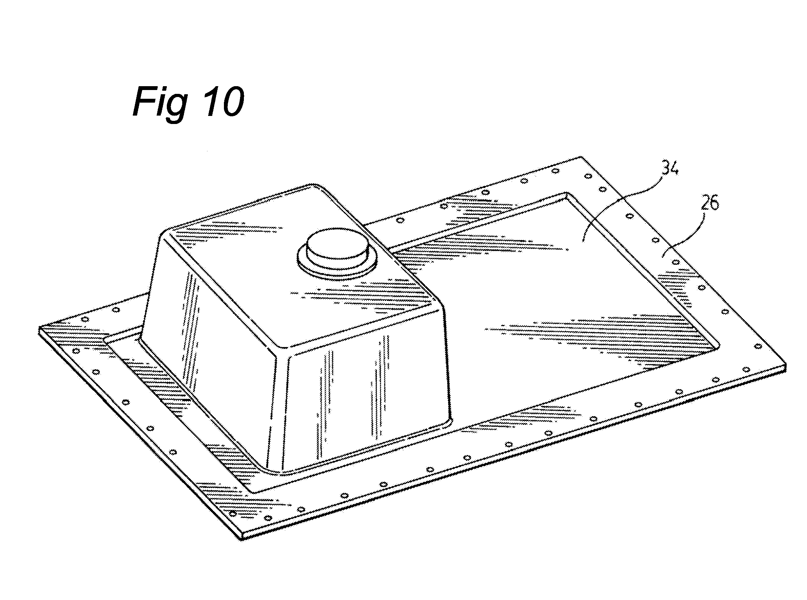

Figure 7 illustrates the showface component 24 of a mold, including the front face of the shell 26, water jacket 28 with heating/cooling channels 30 formed therein and support frame casting 32. Figure 9 depicts the heating/cooling channel formers 31 attached to the rear surface 33 of the showface shell 26, as described above with reference to Figure 1. Figure 10 shows the front surface 34 of the showface shell 26.

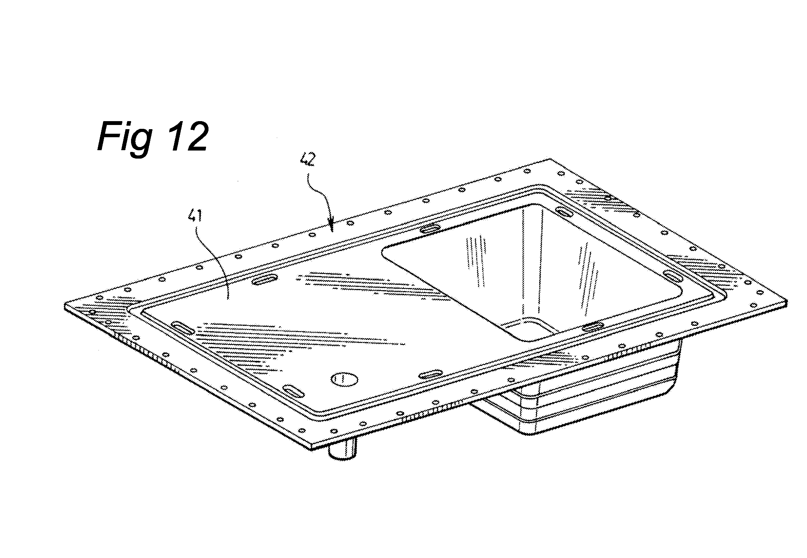

Figure 8 illustrates the backface component 40 of a mold, including the rear face of the shell 42 with water jacket 44 with heating/cooling channels not shown, support casting 46 and frame casting 48. Figure 11 shows channel formers 50 attached to the rear surface 52 of the backface shell 42. Figure 12 shows the front surface 41 of the backface shell 42.

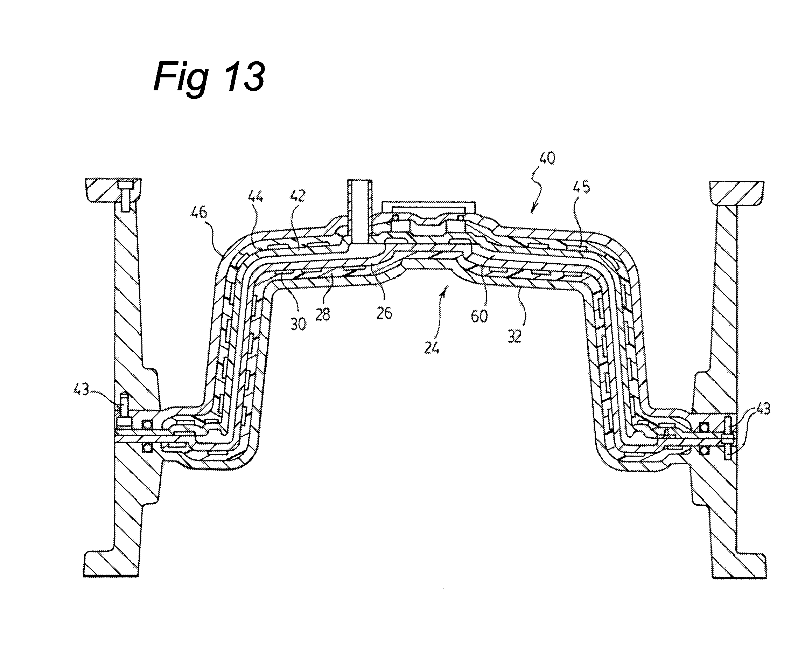

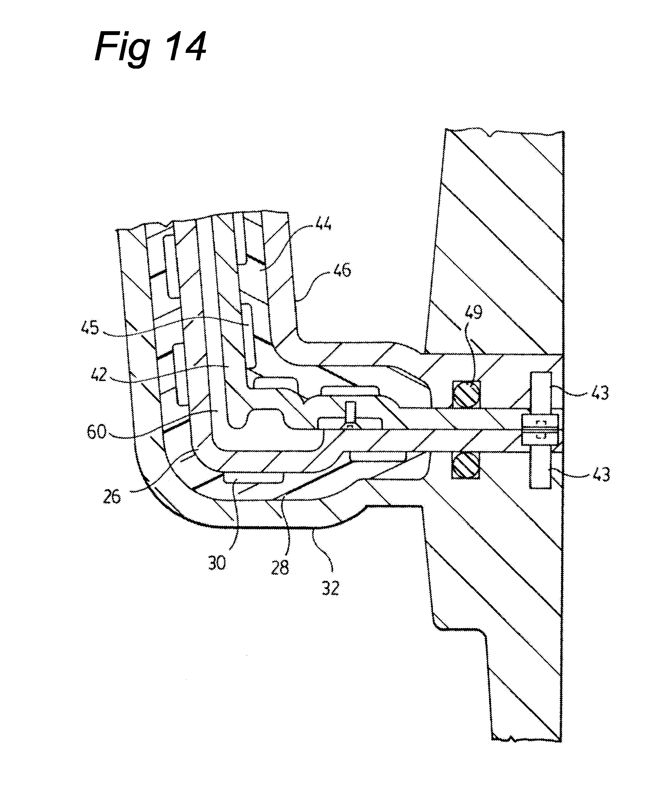

Turning now to Figures 13 and 14, Figure 13 illustrates showface and backface shell components 24, 40 of the mold assembly joined together about their perimeters by cap screws 43. Showface component 24 comprises shell 26, water jacket 28 with heating/cooling channels 30 and support frame casting 32. Backface component 40 comprises shell 42, water jacket 44 with heating/cooling channels 45 and backface casting 46. Mold cavity 60 is defined between the showface and backface shells.

Figure 14 is an enlarged cross-section in detail of section "A" shown in Figure 13, in which support casting 32 is secured to showface shell 26 by low head cap screws 43, gripping water jacket 28 and O-ring 47 therebetween, and in which support casting 46 is secured to backface shell 42 by low head cap screws 43, gripping water jacket 44 and O-ring 49 therebetween.

It will be understood, of course, that modifications can be made in the embodiments of the invention described herein without departing from the scope and purview of the invention as defined by the appended claims.

## Claims

1. A method for producing heating and/or cooling fluid channels in a fluid jacket for use in a mold having a metal shell with a front surface having the shape of an article to be molded and an opposite rear surface, and a rear support casting adapted to be attached to the rear of the shell to define a space between the metal shell rear surface and the support casting, the method comprising attaching a channel former to the rear surface of the metal shell in a desired fluid flow configuration, attaching the support casting to the rear of the metal shell to define a designed cavity between the rear surface of the metal shell and the support casting, injecting a curable elastomer into the cavity under pressure to fill the cavity, allowing the elastomer to cure, and removing the channel formers from the cured elastomer whereby said channels are formed in the fluid jacket.

2. A method as claimed in claim 1, in which a plurality of channel formers are placed on the rear surface of the metal shell in a desired fluid flow configuration.

3. A method as claimed in claim 2, in which an inlet flow connection and an outlet flow connection are formed in the support casting for connecting each of said flow channels to a source of heating or cooling fluid.

4. A method as claimed in claim 1, in which the channel former has the characteristics of modelling clay or plastecine.

5. A method as claimed in claim 4, in which modelling clay or plastecine is provided in a desired flow channel profile configuration by extrusion.

6. An elastomeric fluid jacket having a plurality of fluid channels for use in injection or compression molding produced by the method of claim 1.

7. An elastomeric rubber fluid jacket as claimed in claim 6 in which said elastomer is silicone elastomer.

8. A mold for plastic process molding comprising a showface mold component and an opposed backface mold component, each of said mold components having a nickel shell with a rear surface, a flexible elastomer fluid jacket having fluid channels formed therein abutting each said shell rear surface, a support casting secured to the rear surface of each of said nickel shells gripping the elastomer fluid jacket therebetween, means for attaching showface mold and the backface mold together defining a product cavity therebetween, and means for communicating the fluid flow channels with heating or cooling fluids.

9. A mold as claimed in claim 8, in which the flexible elastomer fluid jacket is comprised of silicone.

10. A mold as claimed in claim 8, in which the flexible elastomer fluid jacket is produced by the method of claim 1.
